Europäisches Patentamt

**European Patent Office**

**Office européen des brevets**

(19)

(11) Numéro de publication: **0 178 230**
A1

# (12) DEMANDE DE BREVET EUROPEEN

(21) Numéro de dépôt: 85401969.2

(22) Date de dépôt: 09.10.85

(51) Int. Cl.⁴: **F 16 L 47/00,** F 16 L 3/22, F 16 L 19/06

(30) Priorité: 10.10.84 FR 8415516

(43) Date de publication de la demande: 16.04.86 Bulletin 86/16

(84) Etats contractants désignés: **AT BE CH DE GB IT LI LU NL SE**

(71) Demandeur: **ST MIHIEL S.A., 2, rue de la Marsoupe, F-55300 St. Mihiel (FR)**

(72) Inventeur: **Dumez, Roger, 9, rue du Faubourg Saint Christophe, F-55300 Saint Mihiel (FR)**

(74) Mandataire: **Chameroy, Claude et al, c/o Cabinet Malemont 42, avenue du Président Wilson, F-75116 Paris (FR)**

(54) **Bague de serrage et d'étanchéité, procédé pour sa fabrication et raccord pour tuyaux semi-rigides équipé d'une telle bague.**

(57) La présente invention concerne une bague de serrage et d'étanchéité (B) du type formé par un élément annulaire rigide (1) fendu (en 2) sur toute sa hauteur et de part en part le long d'un court secteur de sa circonférence, de manière à présenter deux branches flexibles (3, 4) aptes à être rapprochées l'une de l'autre par compression radiale, caractérisée en ce que l'élément annulaire (1) porte en relief sur chacune de ses faces latérales intérieure (5) et extérieure (10) un joint d'étanchéité élastique (6 ou 8).

L'invention se rapporte également au procédé de fabrication de la bague (B).

1

## Bague de serrage et d'étanchéité, procédé pour sa fabrication et raccord pour tuyaux semi-rigides équipé d'une telle bague

La présente invention concerne une bague de serrage formée par un élément annulaire rigide fendu sur toute sa hauteur et de part en part le long d'un court secteur de sa circonférence, de manière à présenter deux branches flexibles aptes à être rapprochées l'une de l'autre par compression radiale.

La présente invention a trait également à un raccord à serrage extérieur pour tuyaux semi-rigides, comprenant un corps de forme générale tubulaire dont l'une des extrémités est pourvue d'un moyen d'accouplement à un raccord complémentaire, ainsi qu'un organe de compression monté déplaçable axialement à l'intérieur de la seconde extrémité du corps et présentant une ouverture centrale à travers laquelle une extrémité d'un tuyau semi-rigide peut être introduite jusqu'au centre du corps et des moyens insérés entre un épaulement du corps et l'organe de compression pour, en réponse au déplacement axial de ce dernier, bloquer ladite extrémité du tuyau et réaliser une étanchéité autour de celle-ci.

Dans les raccords actuels de ce type, dont l'organe de compression est constitué par un écrou vissé dans le corps, le blocage et l'étanchement de l'extrémité du tuyau sont assurés par une bague de serrage fendue du type susmentionné, placée sur une garniture d'étanchéité déformable élastiquement avec interposition d'une rondelle de friction, la bague de serrage étant au contact d'une surface d'appui conique de l'écrou de compression, tandis que la garniture d'étanchéité repose sur l'épaulement du corps du raccord.

De la sorte, si on visse l'écrou de compression après avoir introduit à travers celui-ci l'extrémité d'un tuyau semi-rigide, la bague de serrage se contracte autour de ce dernier pour le solidariser au corps du raccord et la garniture est en même temps écrasée axialement pour assurer sa fonction d'étanchéité entre le tuyau et la paroi intérieure du corps.

Un raccord de ce type ne donne toutefois pas entière satisfaction du fait qu'il doit être équipé de deux organes distincts et superposés de serrage et d'étanchéité du tuyau, et que la garniture d'étanchéité doit en outre être d'une hauteur assez grande pour pouvoir remplir convenablement sa fonction. Cette double disposition a en effet pour conséquence que le raccord est d'une longueur trop importante pour des raccordements à faire dans des espaces réduits et d'accès difficile.

La présente invention vise à remédier à cet inconvénient en proposant une bague de serrage du type spécifié en préambule qui se caractérise en ce que

2

l'élément annulaire fendu porte sur l'une au moins de ses faces latérales intérieure et extérieure, un joint d'étanchéité élastique, de préférence retenu dans une gorge creusée dans ladite face latérale.

Dans un mode de réalisation préféré de la présente invention, l'élément annulaire porte un joint d'étanchéité aussi bien sur sa face latérale intérieure que sur sa face latérale extérieure, et dans ce cas, les deux joints d'étanchéité s'étendent avantageusement sur toute la circonférence de l'élément annulaire en remplissant totalement la fente délimitée par les deux branches flexibles de ce dernier.

Comme on le comprendra aisément, la bague selon l'invention remplit tout à la fois une fonction de serrage et une fonction d'étanchéité lorsqu'elle est comprimée radialement. En conséquence, dans un raccord à serrage extérieur du type décrit ci-dessus, elle peut, selon un autre aspect de l'invention, être avantageusement substituée à la bague de serrage et à la garniture d'étanchéité existantes pour jouer à elle seule le même rôle que ces deux dernières en occupant une hauteur bien moins importante.

Ainsi, grâce à l'invention, on peut réaliser des raccords à serrage extérieur bien plus compacts que ceux actuellement sur le marché et donc particulièrement bien adaptés pour effectuer des raccordements dans des espaces de dimensions réduites. En outre, de par la diminution du nombre de leurs pièces constitutives, ces raccords sont d'un assemblage grandement simplifié.

Dans un raccord de ce type équipé d'une bague de serrage conforme à l'invention, il est bien entendu nécessaire que l'organe de compression, c'est-à-dire l'écrou, s'appuie contre la bague par une surface annulaire conique s'évasant en direction de cette dernière, mais de plus, pour réduire le couple à appliquer sur l'organe de compression, l'épaulement du corps contre lequel s'appuie la bague de serrage sera de préférence un épaulement conique s'évasant en direction de cette dernière. En complément à ces dispositions, il sera en outre avantageux que les deux tranches de la bague de serrage soient chanfreinées sur toute leur circonférence conformément respectivement à la conicité de la surface d'appui de l'organe de compression et à celle de l'épaulement du corps du raccord.

Enfin, selon une autre caractéristique importante de la bague de serrage selon l'invention, la face de contact de chacun de ses joints d'étanchéité est légèrement concave entre ses deux branches flexibles, dans la

3

position d'écartement maximum de ces dernières.

Cette disposition a pour but d'éviter la formation de boursoufflures sur les parties des joints comprimées entre les deux branches flexibles de la bague, lorsque celle-ci est dans sa position de serrage, et d'assurer ainsi une répartition uniforme de la pression de contact des joints sur toute la circonférence du tuyau et de la paroi intérieure du corps du raccord.

Une bague de serrage dotée d'une telle caractéristique peut être confectionnée par mise en oeuvre d'un procédé original qui fait également l'objet de la présente invention et qui se caractérise en ce que l'on comprime radialement l'élément annulaire fendu constituant le corps de la bague sans amener ses deux branches flexibles en contact mutuel, puis on moule les deux joints sur les faces intérieure et extérieure de l'élément annulaire ainsi qu'entre ses deux branches flexibles et, après prise de la matière moulée, on relâche la pression radiale exercée sur l'élément annulaire.

Le mode de réalisation préféré de la bague de serrage et d'étanchéité conforme à la présente invention va maintenant être décrit plus en détails, mais uniquement à titre d'exemple non limitatif, en référence au dessin annexé dans lequel :

- la figure 1 est une vue en perspective d'une bague conforme à ce mode de réalisation de l'invention ;

- la figure 2 est une vue en plan de cette même bague ;

- la figure 3 est une vue en coupe effectuée selon la ligne III-III de la figure 2 et à plus grande échelle ; et

- la figure 4 est une vue en coupe longitudinale d'un raccord à serrage extérieur pour tuyaux semi-rigides, équipé de la bague des figures 1 à 3.

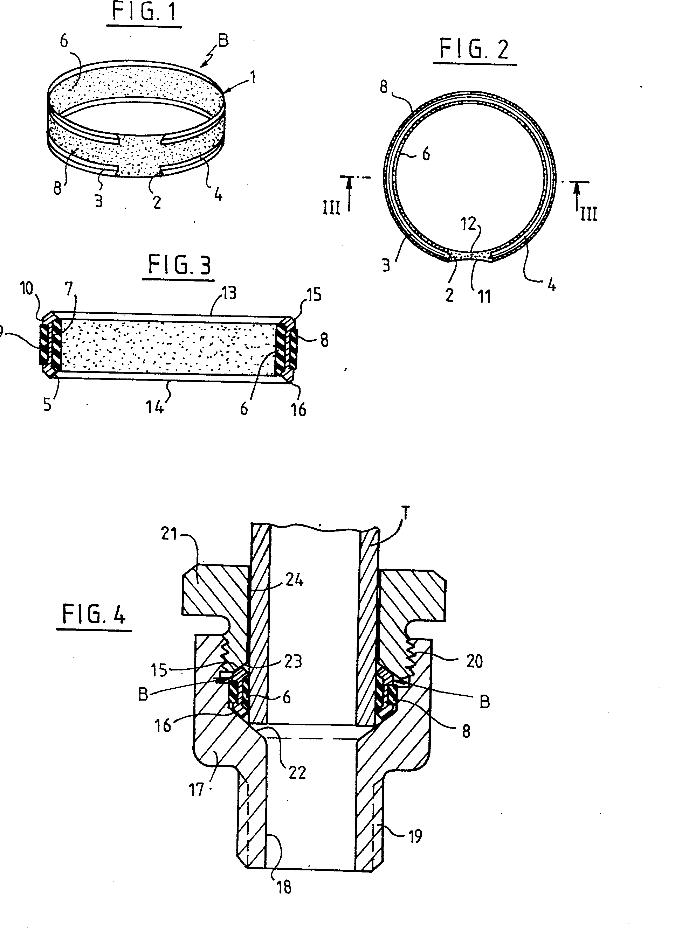

La bague de serrage et d'étanchéité B représentée sur les figures 1 à 3 est réalisée à partir d'un élément métallique annulaire 1 fendu en 2 sur toute sa hauteur et de part en part le long d'un court secteur de sa circonférence. De la sorte, l'élément annulaire 1 présente deux branches flexibles 3 et 4 qui, d'une manière connue en soi, peuvent être rapprochées l'une de l'autre sous l'effet d'une compression radiale.

Selon la caractéristique première de l'invention, l'élément annulaire fendu 1, qui présente une hauteur relativement faible de l'ordre de 9 à 10 mm, porte, en léger relief sur sa face intérieure 5, un joint d'étanchéité en

4

caoutchouc 6 retenu dans une gorge peu profonde 7. Un joint d'étanchéité identique 8 est logé, de la même façon, dans une gorge 9 de faible profondeur
creusée dans la face extérieure 10 de l'élément annulaire 1.

Selon une autre caractéristique de l'invention, les deux joints 6 et
8 s'étendent sur toute la circonférence de l'élément annulaire 1, y compris au
niveau de la fente 2 à travers laquelle ils sont réunis.

Plus précisément, les deux joints sont venus.de moulage à travers la
fente 2 en la remplissant entièrement. Pour réaliser ce moulage, on commence.par
comprimer radialement l'élément annulaire 1 sans toutefois amener ses deux
branches flexibles 3 et 4 en contact mutuel. Puis, à l'aide d'un moule approprié, on coule dans les gorges 7 et 9 et la fente 2 du caoutchouc liquide. Une
fois que le caoutchouc a pris, on retire le moule et on relâche l'effort exercé
sur l'élément annulaire. Par suite, la face de contact de chacun des joints 6 et
8, qui avant relâchement de cet effort, est continue et uniforme, présente,
dans la position d'écartement maximum des deux branches flexibles 3 et 4 de
l'élément annulaire 1, une légère concavité entre ces dernières comme indiqué
en 11 et 12 sur la figure 2.

En se reportant à la figure 3, on observera encore que chacune des
tranches 13 et 14 de l'élément annulaire 1 présente sur toute sa circonférence
un chanfrein 15, 16 tourné vers l'extérieur de la bague B.

La figure 4 illustre un raccord à serrage extérieur pour tuyaux semi-
rigides, équipé d'une bague de serrage et d'étanchéité du type de celle qui
vient d'être décrite.

De manière connue en soi, ce raccord comprend un corps métallique
moulé 17 traversé de part en part par un alésage longitudinal 18. A l'une de
ses extrémités, le corps 17 présente un filetage extérieur 19 tandis qu'à son
extrémité opposée, il est muni d'un filetage intérieur 20 dans lequel vient se
visser un écrou de compression 21.

Selon l'invention, la bague de serrage B est insérée entre l'écrou
de compression 21 et un épaulement annulaire 22 ménagé dans la paroi de l'alésage 18 du corps 17. Plus précisément, l'écrou de compression 21 s'appuie sur
la bague B par une surface annulaire conique 23 qui s'applique contre le
chanfrein 15 de celle-ci tandis que l'épaulement 21 présente une surface d'appui
conique qui s'évase vers la bague B conformément à la conicité du second
chanfrein 16 de cette dernière.

5

Le raccord à serrage extérieur qui vient d'être décrit est spécialement conçu pour être monté à l'extrémité d'un tuyau semi-rigide, tel qu'un tuyau en matière plastique souple, de la manière décrite ci-après.

L'écrou de compression 21 étant légèrement dévissé pour être libre de tout contact avec la bague B, on commence par introduire, à travers l'ouverture 24 de celui-ci, l'extrémité du tuyau T jusqu'à ce qu'elle vienne se placer à l'intérieur de la bague. Puis, on visse l'écrou 21 dans le corps 17 si bien que sa surface d'appui conique 23 vient en contact avec le chanfrein 15 de la bague B avant de glisser le long de celui-ci.

Il s'ensuit alors que les deux branches flexibles 3 et 4 de la bague B sont rapprochées l'une de l'autre par compression radiale pour enserrer fermement le tuyau T et le solidariser ainsi au corps 17 du raccord. Dans le même temps, les joints 6, 8 sont mis en pression pour assurer une étanchéité entre le tuyau T et la paroi de l'alésage 18 du corps . Il est à noter ici que, grâce à la concavité 11, 12 de la face de contact des joints 6, 8 entre les branches flexibles 3, 4, aucune boursoufflure des joints n'apparaît entre celles-ci lorsqu'elles sont rapprochées l'une de l'autre dans la position de serrage de la bague et l'étanchéité du raccord n'en est que mieux assurée.

Le tuyau T ainsi pourvu de son raccord peut alors être connecté, par l'intermédiaire du filetage extérieur 19 du corps 17, à un raccord complémentaire à filetage femelle, solidaire par exemple d'un autre tuyau ou d'un réservoir de liquide.

Il va de soi que l'écrou de compression 21 doit être dimensionné de telle façon à pouvoir être traversé par le tuyau T. Il en est de même pour la bague B qui, à l'état relâché, doit en outre présenter un diamètre intérieur à peine supérieur au diamètre extérieur du tuyau T pour pouvoir l'enserrer convenablement sous l'effet d'une faible compression radiale. En conséquence, on disposera, pour un même corps 17 de raccord, d'un jeu d'écrous de compression 21 et de bagues de serrage et d'étanchéité B de différentes dimensions adaptées aux différents diamètres extérieurs du tuyau T.

6

Revendications

1. Bague de serrage et d'étanchéité (B) du type formé par un élément annulaire rigide (1) fendu (en 2) sur toute sa hauteur et de part en part le long d'un court secteur de sa circonférence, de manière à présenter deux branches flexibles (3, 4) aptes à être rapprochées l'une de l'autre par compression radiale, caractérisée en ce que l'élément annulaire (1) porte en relief sur chacune de ses faces latérales intérieure (5) et extérieure (10), un joint d'étanchéité élastique (6 ou 8).

2. Bague de serrage et d'étanchéité selon la revendication 1, caractérisée en ce que chaque joint d'étanchéité (6 ou 8) est retenu dans une gorge (7 ou 9) creusée dans la face latérale correspondante (5 ou 10) de l'élément annulaire (1).

3. Bague de serrage et d'étanchéité selon la revendication 1 ou 2, caractérisée en ce que les deux joints d'étanchéité (6, 8) s'étendent sur toute la circonférence de l'élément annulaire (1) en remplissant totalement la fente (2) délimitée par les deux branches flexibles (3, 4) de ce dernier.

4. Bague de serrage et d'étanchéité selon la revendication 3, caractérisée en ce que la face de contact (11, 12) de chaque joint d'étanchéité (6, 8) est légèrement concave entre les deux branches flexibles (3, 4) de l'élément annulaire (1), dans la position d'écartement maximum de ces dernières.

5. Procédé pour fabriquer une bague de serrage et d'étanchéité telle que définie par la revendication 4, caractérisé en ce que l'on comprime radialement l'élément annulaire (1) sans amener ses deux branches flexibles (3, 4) en contact mutuel, puis on moule les deux joints sur les faces intérieure et extérieure (5, 10) de l'élément annulaire (1) ainsi qu'entre ses deux branches flexibles (3, 4) et après prise de la matière moulée, on relâche la pression radiale exercée sur l'élément annulaire (1).

6. Raccord à serrage extérieur pour tuyaux semi-rigides, du type comprenant un corps (17) de forme générale tubulaire dont l'une des extrémités est pourvue d'un moyen d'accouplement à un raccord complémentaire ainsi qu'un organe de compression (21) monté déplaçable axialement à l'intérieur de la seconde extrémité du corps et présentant une ouverture centrale à travers laquelle une extrémité d'un tuyau semi-rigide (T) peut être introduite jusqu'au centre du corps et une bague de serrage et d'étanchéité

7

insérée entre un épaulement (22) du corps (17) et l'organe de compression (21) pour, en réponse au déplacement axial de ce dernier, bloquer ladite extrémité du tuyau (T) et réaliser une étanchéité autour de celle-ci, caractérisé en ce que cette bague est constituée par une bague (B) selon l'une quelconque des revendications 1 à 4 présentant un diamètre suffisamment grand pour être traversée par ladite extrémité de tuyau, l'organe de compression (21) s'appuyant contre l'élément annulaire rigide de cette bague (B) par une surface annulaire conique (22) s'évasant en direction de cette dernière.

7. Raccord selon la revendication 5, caractérisé en ce que la tranche (13) de la bague (B) qui est en contact avec l'organe de compression (21) est chanfreinée (en 15) conformément à la conicité de la surface d'appui (23) de ce dernier.

8. Raccord selon la revendication 6 ou 7, caractérisé en ce que l'épaulement (22) du corps (17) contre lequel s'appuie la bague (B) est un épaulement conique s'évasant en direction de cette dernière.

9. Raccord selon la revendication 8, caractérisé en ce que la tranche (14) de la bague (B) qui est en contact avec l'épaulement (22) du corps (17) est chanfreinée (en 15) conformément à la conicité de ce dernier.

0178230

1/1

FIG. 1

FIG. 2

FIG. 3

FIG. 4

0178230

**RAPPORT DE RECHERCHE EUROPEENNE**

Office européen
des brevets

Numero de la demande

EP  85 40 1969

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| X | FR-A-1 058 113  (NOIROT)<br><br>* Page 2, colonne 2, lignes 37-49; figures 2-4 *<br><br>--- | 1-3,6-9 | F 16 L  47/00<br>F 16 L  33/22<br>F 16 L  19/06 |
| Y | GB-A- 432 729  (THE LEAD WOOL CO., LTD.)<br>* Page 3, lignes 45-62; figures 1-8 *<br><br>--- | 1-3,6-9 | |
| Y | DE-A-2 705 554  (F.J. GÖCKLER)<br><br>* Page 6, lignes 21-30; figure 2 *<br><br>--- | 1-3,6-9 | |
| A | FR-A-1 195 419  (SOCIETE P.C.C.)<br>* Figures 1-5 *<br><br>--- | 1-3 | |
| A | DE-C- 635 767  (DEUTSCHE EISENWERKE AG)<br><br>----- | | DOMAINES TECHNIQUES RECHERCHES (Int. Cl.4)<br><br>F 16 L |

Le présent rapport de recherche a été établi pour toutes les revendications

| Lieu de la recherche | Date d'achèvement de la recherche | Examinateur |
|---|---|---|
| LA HAYE | 04-12-1985 | ANGIUS P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82